# FASCICULE DE BREVET EUROPEEN

(11) **EP 0 968 802 B1**
(45) Date de publication et mention de la délivrance du brevet: **10.09.2003**
(21) Numéro de dépôt: 99111649.2
(22) Date de dépôt: 16.06.1999
(51) Int. Cl.: B29C 33/42, B29C 33/44, B29C 33/30, B29L 30/00

(54) **Moule et élément moulant pour mouler une incision dans un article de gomme**
Formwerkzeug und formgebendes Element zum Formen eines Einschnittes in einem Gegenstand aus Gummi
Mould and moulding element to form an incision in a rubber article

(30) Priorité: 03.07.1998 FR 9808653
(43) Date de publication de la demande: 05.01.2000
(73) Titulaire: MICHELIN RECHERCHE ET TECHNIQUE S.A., CH-1763 Granges-Paccot (CH); Société de Technologie Michelin, 63000 Clermont-Ferrand (FR)
(72) Inventeur: Merino Lopez, José, 63200 Riom (FR); Kaczorwski, Jean-Claude, 63200 Malauzat (FR); Auxerre, Pascal, 63130 Royat (FR)
(74) Mandataire: Diernaz, Christian

(56) Documents cités:
- EP-A- 0 774 307
- EP-A- 0 816 687
- WO-A-96/26058
- DE-A- 19 506 697
- FR-A- 2 722 145
- US-A- 4 994 126
- PATENT ABSTRACTS OF JAPAN vol. 014, no. 491 (M-1040), 25 octobre 1990 (1990-10-25) & JP 02 200414 A (PENTEL KK), 8 août 1990 (1990-08-08)

## Description

L'invention concerne un moule pour mouler un pneumatique, ledit moule comportant au moins un élément moulant destiné à mouler une découpure dans ledit pneumatique; cette invention concerne également un élément moulant destiné à mouler une découpure dans un pneumatique.

Pour mouler des découpures dans la bande de roulement d'un pneumatique, on emploie de manière habituelle un moule formé d'une pluralité de pièces de moule, chacune desdites pièces pouvant comporter une pluralité d'éléments moulants faisant saillie sur la surface de moulage desdites pièces de moule. Par découpure, on entend aussi bien des rainures (de largeur au moins égale à 3mm) que des incisions (c'est à dire des rainures de largeur inférieure à 3 mm).

Un élément moulant comporte en général deux parties, une première partie formant la partie moulante de l'élément moulant fait saillie sur la surface de moulage du moule, et une seconde partie située dans le prolongement de la première est ancrée dans le moule. L'ancrage de cette seconde partie est, par exemple pour un moule réalisé par coulée, obtenu au moment de la coulée du matériau constitutif dudit moule, ledit matériau venant envelopper et emprisonner ladite seconde partie de l'élément moulant pendant la phase de refroidissement dudit matériau.

Pendant le moulage et la vulcanisation du pneumatique, la partie moulante de l'élément moulant est noyée à l'intérieur de la matière caoutchoutique constituant le pneumatique pour former une découpure. Après vulcanisation du pneumatique, les pièces constitutives du moule, sont déplacées suivant leur direction propre de démoulage et s'écartent progressivement les unes des autres de manière à libérer le pneumatique moulé en entraînant avec elles les éléments moulants pour les extraire du pneumatique.

L'obtention d'un pneumatique ayant des performances pérennes en roulage peut être réalisée par la mise en oeuvre d'incisions dont la géométrie et/ou l'orientation moyenne évolue(nt) de manière sensible avec l'usure de la bande de roulement du pneumatique. Cependant, lorsque ces incisions sont moulées, de manière usuelle, au moyen d'éléments moulants rigides, le démoulage desdits éléments est parfois très difficile (car il nécessite un effort d'autant plus important que le nombre d'éléments moulants de ce type est grand), voire même impossible sans risquer d'endommager le pneumatique (par arrachement de parties de mélange de caoutchouc).

Par exemple, la demande française **2.722.145** divulgue une bande de roulement comportant une pluralité d'éléments en relief, certains d'entre eux étant pourvus d'incisions dont la direction moyenne sur la surface de roulement change progressivement avec l'usure de ladite bande. Dès lors que le changement d'orientation devient important, il est clair que l'obtention d'une telle incision au moyen d'un élément moulant comportant une lame rigide formant la partie moulante de même géométrie est délicate, au moins dans la phase du démoulage (c'est-à-dire de l'extraction dudit élément moulant).

Il en est de même quand un élément moulant comporte au moins une lame rigide ayant la forme d'une hélice ou une forme vrillée, ou toute géométrie entraînant l'existence d'un couple résultant de torsion s'exerçant sur la partie moulante pendant le démoulage. Pour ne pas endommager l'aspect de la bande de roulement au cours de cette opération de démoulage, l'emploi de ce type d'élément nécessite des précautions particulières le plus souvent incompatibles avec les impératifs de la production industrielle.

Pour pallier ces difficultés, il est proposé un moule pour mouler une bande de roulement d'un pneumatique, ledit moule étant formé d'une pluralité de pièces, chaque pièce de moule comprenant une surface de moulage pour mouler une partie de la surface de ladite bande et pouvant être déplacée suivant une direction de moulage/démoulage.

En outre, au moins une pièce de moule est pourvue d'au moins un élément moulant pour mouler au moins une incision dans ladite bande, ledit élément moulant comportant deux parties situées dans le prolongement l'une de l'autre, une première partie formant la partie moulante de l'élément moulant et faisant saillie sur la surface de moulage pour mouler ladite incision dans la bande de roulement et une deuxième partie ayant la forme d'un cylindre d'axe **XX'** et pouvant tourner autour de **XX',** confondu avec la direction de moulage/démoulage de la pièce de moule, et étant destinée à être montée dans un logement prévu dans la pièce de moule.

La pièce de moule est caractérisée en ce qu'il est prévu des moyens de montage et de fixation de la deuxième partie de l'élément moulant dans le logement prévu dans le moule, lesdits moyens de montage autorisant la rotation de l'élément moulant autour de son axe XX' pendant au moins la phase de démoulage.

La première partie de l'élément moulant est destinée à mouler dans le pneumatique au moins une incision; pour cela, elle comporte au moins une lame dont la géométrie est telle que durant le démoulage, les efforts de contact de la gomme entourant ladite première partie créent un couple résultant autour de la direction principale de l'élément **XX'** tendant à faire tourner ledit élément moulant autour de **XX'.** Le montage libre en rotation dudit élément moulant rend possible et facilite l'extraction de la partie moulante de l'élément moulant hors du pneumatique pendant le démoulage.

Une variante de réalisation consiste à monter la deuxième partie de l'élément moulant libre en rotation sur une base ayant la forme d'un cylindre, ladite base étant elle-même prévue pour être montée fixe en rotation à l'intérieur d'un logement prévu dans une pièce de moule. Cette disposition permet d'éviter une usure de la pièce de moule créée par le frottement avec la partie mobile en rotation de l'élément moulant.

De manière avantageuse, il peut être prévu de combiner à la fois un mouvement relatif de rotation de l'élément moulant par rapport au moule et un mouvement de translation du même élément moulant par rapport au moule afin de rendre plus facile la pénétration et/ou l'extraction de la partie moulante dans ou hors de la gomme. Dans ce but, on réalise dans le moule un logement de forme générale cylindrique d'axe principal **XX'** et pouvant recevoir un élément moulant dont la partie introduite à l'intérieur dudit logement est adaptée pour tourner autour de cette direction **XX';** en outre, il est prévu des moyens pour déplacer ledit élément moulant dans la direction **XX'** à l'intérieur dudit logement. De façon complémentaire, on peut prévoir des moyens pour assurer une position déterminée de l'élément moulant dans la configuration de moulage.

Il est également intéressant de prévoir la présence de moyens pour imposer une rotation avant ou pendant l'opération de moulage et /ou de démoulage qu'il y ait ou non une possibilité de déplacement de l'élément moulant dans son logement; cette rotation peut être avantageusement synchronisée avec le déplacement de l'élément selon **XX'** (correspondant au mouvement de démoulage de la pièce de moule et/ou au mouvement à l'intérieur du logement de l'élément moulant).

De manière connue, les éléments moulants employés pour mouler des découpures dans un pneumatique, sont soit formés directement sur le moule de moulage dudit pneumatique au cours de la fabrication du moule, soit formés séparément et rapportés sur le moule pendant sa fabrication ou après. La technique de fabrication des moules et celle de moulage des pneumatiques limitent les possibilités de moulage de formes de découpures aux formes pouvant être démoulées sans découper ou arracher le mélange de caoutchouc après vulcanisation de celui-ci).

Il est connu, par exemple par la demande de brevet française n° **97/05194,** des éléments moulants permettant de mouler des incisions de forme non démoulable (c'est-à-dire comportant des parties en contre dépouille); toutefois, l'utilisation de tels éléments moulants impose une déformation de la partie moulante pendant le démoulage, ladite déformation pouvant devenir permanente après un plus ou moins grand nombre de moulages.

Pour remédier à ces inconvénients, il est proposé un élément moulant destiné à équiper une pièce d'un moule moulant un article en mélange de caoutchouc comme une bande de roulement pour pneumatique ou pour chenille, pour réaliser au moins une incision dans ladite bande, ladite pièce de moule pouvant être animée d'un mouvement de moulage et/ou de démoulage suivant une direction prédéterminée. L'élément moulant selon l'invention est caractérisé en ce qu'il comprend :
- un corps pourvu d'une tête prolongée d'une partie moulante, ladite partie moulante étant destinée à faire saillie à la surface de moulage de la pièce de moule pour mouler au moins une incision dans la bande de roulement,
- la tête comportant au moins un cylindre de section circulaire d'axe **XX'** définissant l'axe principal de l'élément moulant, et des moyens de montage dudit élément moulant dans la pièce de moule, lesdits moyens coopérant avec ladite pièce pour permettre une rotation, autour de **XX',** de la tête par rapport au moule quand la partie moulante de l'élément moulant est soumise soit à un effort agissant selon la direction **XX',** soit à un couple de rotation autour de la même direction **XX',** tout en assurant un blocage de l'élément moulant dans la direction **XX'.**

Dès lors que la partie moulante de l'élément moulant selon l'invention comporte au moins une lame de moulage fixée à la tête dudit élément par l'une de ses extrémités et s'étendant dans une direction formant au moins localement un angle non nul avec la direction XX', cette partie moulante est soumise, au cours du démoulage, à des efforts exercés par le mélange de caoutchouc dont la résultante se traduit par un couple agissant autour de la direction **XX'.** Sous cette action, l'élément moulant va tourner autour de son axe **XX**' et permettre ainsi le démoulage sans dégradation de la bande de roulement moulée et vulcanisée.

Cet élément moulant permet de réaliser une incision de forme a priori non démoulable c'est-à-dire dont la géométrie de la partie moulante a au moins partiellement la forme d'une hélice ou d'une vrille. Par partiellement, on entend le fait que l'incision suit un profil d'hélice sur une partie seulement de sa longueur.

Une forme de réalisation d'un élément moulant permettant l'obtention d'un moule conforme à l'invention consiste à pourvoir ledit élément avec des moyens de montage et de fixation dudit élément moulant sur la pièce de moule, ces moyens de montage comprenant une base de forme cylindrique concentrique à la tête de l'élément moulant, ladite base étant destinée à être installée et fixée bloquée en rotation dans un logement prévu dans la pièce de moule portant l'élément moulant. Cette base est prévue pour coopérer avec la tête de l'élément moulant pour permettre la rotation de ladite tête par rapport à ladite base et en conséquence par rapport à la pièce de moule portant l'élément moulant

L'élément moulant selon l'invention résout le problème posé dans le cas d'une géométrie d'hélice a priori difficilement démoulable voire non démoulable; sous l'effet du déplacement de la partie de moule portant l'élément moulant selon l'invention, l'action mécanique résultante des mélanges de caoutchouc entourant ledit élément moulant sur celui-ci va provoquer une rotation de l'élément moulant autour de la direction principale dudit élément (sensiblement perpendiculaire à la surface de moulage du moule ou dans une direction légèrement inclinée par rapport à cette surface c'est-à-dire d'un angle au plus égal à **15°**).

Le moule et l'élément moulant selon l'invention seront mieux compris au moyen de la description de plusieurs variantes de réalisation données à titre non limitatif et décrites en faisant référence aux figures suivantes :
La figure **1** montre une vue partielle en coupe d'une pièce d'un moule pour mouler une partie d'une bande de roulement d'un pneumatique comportant un élément moulant de forme cylindrique d'axe **XX'** monté sur ladite pièce de moule de manière libre en rotation autour de **XX'** dans un logement ayant la forme d'une rainure circulaire;
La figure **2** montre une coupe d'un moule pourvu d'un logement en forme de trou cylindrique à l'intérieur duquel est installée la tête d'un élément moulant pouvant tourner autour de son axe XX';
La figure **3** montre une coupe d'un élément moulant selon l'invention comportant une tête cylindrique montée libre en rotation à l'intérieur d'une base cylindrique, ladite base étant prévue pour être fixée dans un moule;
La figure **4** montre une coupe d'une variante d'un élément moulant selon l'invention dont la tête cylindrique, montée libre en rotation à l'intérieur d'une base cylindrique, peut également se déplacer selon la direction axiale **XX'** de ladite base;
La figure **5** montre une coupe de la variante de l'élément moulant montré à la figure **4,** en position de démoulage;
La figure **6** montre une coupe d'une variante d'un élément moulant selon l'invention formé de deux cylindres concentriques montés rotatifs autour d'une base cylindrique destinée à être mise en place dans un moule de pneumatique.

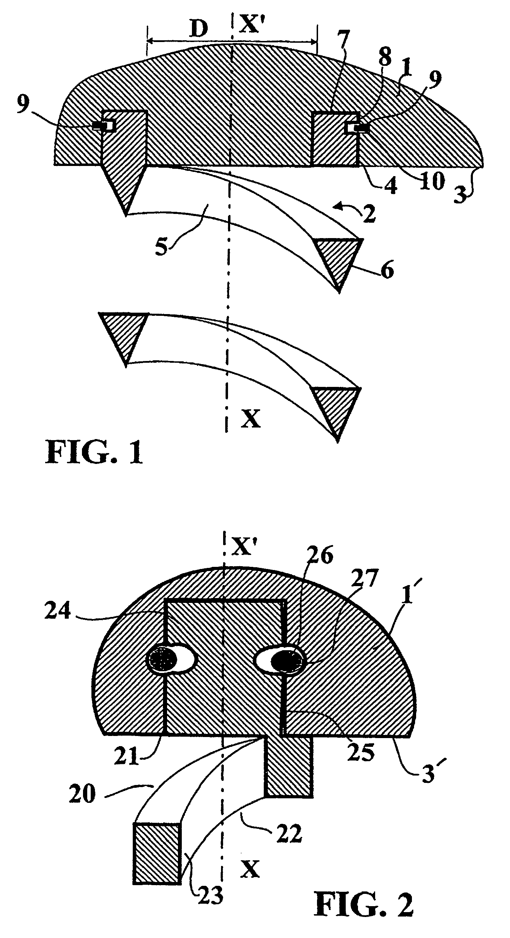

La figure **1** montre une coupe partielle d'une pièce d'un moule **1** d'une bande de roulement d'un pneumatique sur laquelle est monté un élément moulant **2** destiné à mouler une incision dont la forme moyenne est une hélice d'axe **XX'.** La pièce de moule **1** représentée comporte une surface de moulage **3** destinée à mouler une partie de la surface de roulement d'une bande de roulement d'un pneumatique; dans la pièce de moule 1 et débouchant sur cette surface **3,** il est réalisé (par moulage ou par usinage) une rainure 4 cylindrique d'axe **XX'** et dont la trace sur la surface de moulage est circulaire et de diamètre intérieur **D.** Dans le plan de la figure, la rainure **4** présente une section transversale globalement rectangulaire.

L'élément moulant **2** est composé d'une tête cylindrique **7** destinée à être installée à l'intérieur de la rainure **4,** ladite tête **7** étant prolongée par une partie moulante **5** comportant une lame unique **6** de section transversale triangulaire et formant une partie d'hélice autour de **XX'.** L'élément moulant est réalisé dans un matériau, par exemple métallique, présentant une rigidité suffisante pour pouvoir pénétrer dans la gomme crue pendant le moulage.

En outre, des moyens de fixation **10** faisant saillie sur la surface de paroi externe de la tête 7 de l'élément moulant **2** sont prévus pour venir coopérer avec une rainure **9** réalisée sur la paroi 8 de la rainure 4 servant de logement à l'élément moulant la plus éloignée de l'axe **XX'**. Ces moyens **10**, représentés de façon schématique, exercent des efforts élastiques dirigés radialement vers l'extérieur par rapport à l'axe **XX'** et permettent le montage de l'élément moulant 2 tout en laissant libre la rotation dudit élément moulant dans son logement.

Pendant le démoulage après vulcanisation, la gomme, enveloppant la lame **6** en forme d'hélice, va exercer sur ladite lame **6** des efforts de réaction créant un couple autour de **XX'**; sous l'effet de ce couple, l'élément moulant **2** va être contraint à tourner dans son logement **4** autour de **XX';** de cette manière, la lame **6** va pouvoir, en suivant la géométrie de l'incision moulée, sortir de la gomme sans endommager de la bande moulée.

Dans une autre variante de moule **1'** selon l'invention dont on a représenté une coupe partielle à la figure **2,** le logement **21** prévu sur le moule **1'** pour recevoir un élément moulant **20** a la forme d'un trou cylindrique d'axe **XX'** perpendiculaire à la surface de moulage **3'** de la pièce de moule. Bien entendu, il est possible d'envisager de réaliser des logements de forme générale cylindrique d'axe faisant un angle différent de **90°** avec la surface de moulage de la pièce de moule considérée de manière à pouvoir mouler une découpure dont l'axe moyen est incliné par rapport à la perpendiculaire à la surface de moulage; dans ce cas, il est souhaitable de prévoir un angle égal ou peu différent de celui fait par la direction de démoulage de la pièce de moule considérée.

Le corps de l'élément moulant **20** est composé d'une partie moulante **22** formée d'une lame **23** de section rectangulaire et enroulée en hélice autour de **XX'**, ladite partie moulante **22** prolongeant une tête **24** de forme cylindrique de section circulaire dont les dimensions sont adaptées pour venir se placer à l'intérieur du logement **21** avec un jeu approprié à la fois pour permettre la mise en place et la rotation et également réduire autant que possible la pénétration de gomme entre ladite tête et la paroi du logement.

De manière semblable à ce qui a été décrit pour la réalisation montrée à la figure 1, il est prévu, sur la tête **24** de l'élément moulant, des moyens de fixation **26** (par exemple, un circlip) qui permettent l'introduction de ladite tête dans son logement **21** et qui, une fois en place, coopèrent avec une rainure circulaire **27** réalisée sur la paroi **25** dudit logement.

Ce qui vient d'être décrit avec une lame peut être généralisé au cas d'un élément moulant ayant une partie moulante comportant une pluralité de lames formant chacune une hélice et lesdites lames étant parallèles entre elles pour obtenir une rotation de l'élément moulant pendant le démoulage.

De manière avantageuse, l'hélice décrite par chaque lame peut s'inscrire sur un tronc de cône de manière à obtenir une évolution progressive de la sculpture d'une bande de roulement d'un pneumatique avec l'usure de ladite bande; préférentiellement, le tronc de cône virtuel sur lequel chaque lame s'enroule de manière tangente a sa base de plus petit diamètre située au plus près de la tête de l'élément moulant (c'est-à-dire au plus près de la surface de moulage du moule portant ledit élément moulant) et l'angle du tronc de cône est de préférence compris entre **0°** et **20°.** Avec ce type d'élément moulant il est possible de disposer une pluralité d'éléments moulants dont la distance séparant les centres des cercles des petites bases est inférieure à la distance des centres des grandes bases de manière à obtenir en quelque sorte une imbrication des parties moulantes les unes dans les autres.

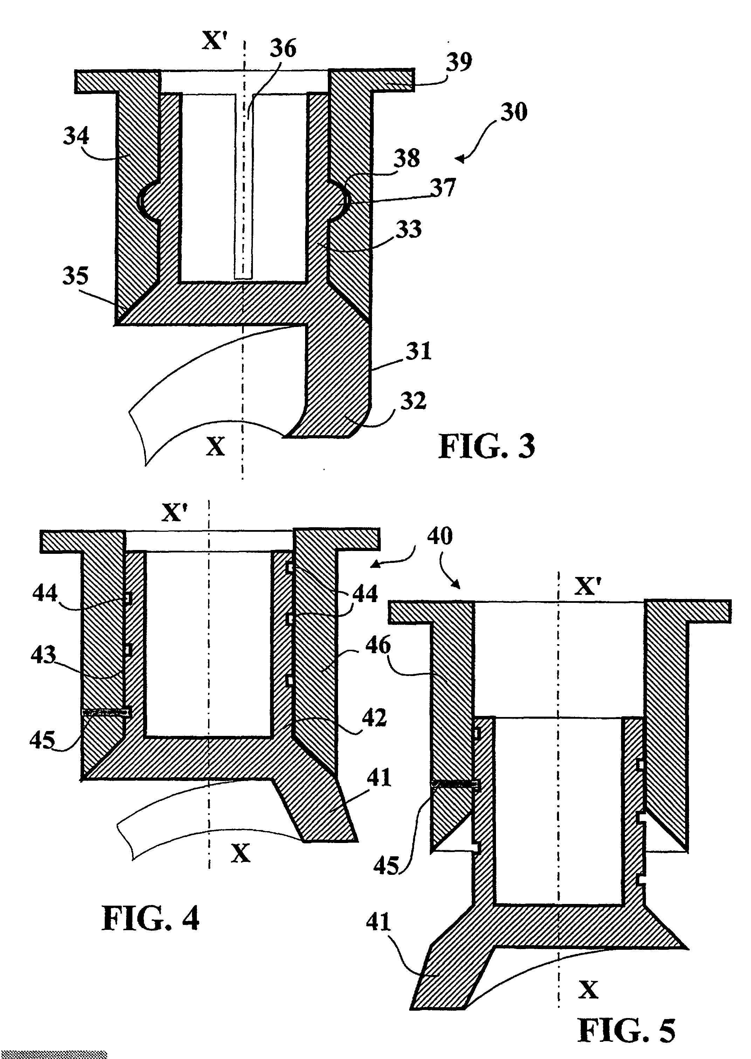

Un mode particulier de réalisation d'un élément moulant **30** selon l'invention est représenté par la figure **3** sur laquelle est montrée une coupe transversale, selon un plan contenant la direction axiale **XX'**, dudit élément

Le corps de l'élément moulant **30** de la figure **3** est composé d'une partie moulante **31** formée d'une lame **32** située dans le prolongement d'une partie cylindrique d'axe **XX'** constituant la tête **33** dudit élément moulant.

En outre, l'élément moulant **30** comporte une troisième partie ayant la forme d'un cylindre de même axe **XX'** que celui de la tête dudit élément moulant, ladite troisième partie formant la base **34** dudit élément à l'intérieur de laquelle est introduite la tête **33** de l'élément moulant de manière mobile en rotation autour de **XX'.**

La présence d'une nervure **37** faisant le tour de la tête **33** de l'élément moulant combinée avec la présence d'une rainure **38** sur la paroi en vis-à-vis de la base **34** permet la rotation de ladite tête par rapport à ladite base tout en maintenant l'assemblage. Pour faciliter le montage de la tête **33** à l'intérieur de sa base **34**, il peut être prévu de former au moins deux découpures **36** dans la tête **33** et dans une direction identique à **XX'**.

Bien sûr d'autres moyens de montage et de fixation peuvent être employés, et en particulier des moyens permettant soit un changement de base soit un changement d'élément moulant.

Pour finir, le montage de l'élément moulant ainsi constitué d'un corps monté dans une base est réalisé en plaçant ladite base à l'intérieur d'un logement prévu à l'intérieur d'une pièce de moule. L'intérêt d'une telle disposition est de permettre de régler, de façon fine, le jeu entre les parties mobiles en rotation (en l'occurrence entre la base et la tête) et de réduire l'usure du moule au contact des parties mobiles en rotation.

Un épaulement **39**, prévu sur la base à l'opposé par rapport à la partie moulante, est destiné à coopérer avec des moyens, non représentés, de liaison dans la direction principale **XX'** de l'élément moulant pour éviter la sortie dudit élément hors de son logement dans le moule pendant le démoulage.

Dans cette variante d'élément moulant, il est avantageux d'employer un moyen réduisant le coefficient de frottement entre la base et la tête, en prévoyant la présence de roulement disposé, par exemple, sur une portée conique **35** d'axe **XX'** prévue entre la base **34** et l'élément moulant **30.**

La figure 4 montre une coupe transversale, selon un plan contenant la direction axiale XX', d'un autre mode de réalisation d'un élément moulant **40** selon l'invention.

L'élément moulant **40** représenté est comparable à celui de la figure **3**, en ce qu'il comporte une partie moulante formée d'une lame **41** s'enroulant en hélice autour de la direction **XX'** et d'une tête **42** ayant la forme d'un cylindre creux, ladite tête étant introduite dans une base **46** de forme cylindrique.

Pour faciliter davantage encore le démoulage, en particulier dans le cas de l'utilisation de lame de géométrie complexe, il est avantageux de prévoir que l'élément moulant est animé à la fois d'un mouvement de rotation et d'un mouvement de translation (par exemple en synchronisant les deux mouvements). Dans ce but, il est proposé de pourvoir la surface de paroi **43** radialement à l'extérieur du cylindre formant la tête **42** avec une rainure **44** ayant un tracé en hélice de sens inverse au sens de l'hélice formé par la lame **41** de la partie moulante; en outre, il est prévu au moins une tige **45** traversant la base **46** pour coopérer avec la rainure **44** formée sur la tête. De cette façon, sous l'action des efforts exercés par la gomme au moment du démoulage, il est possible de contrôler et ajuster la rotation de la partie moulante; de plus, la tige **45** permet de bloquer l'élément moulant en rotation pour fixer de manière correcte la position dudit élément moulant avant moulage.

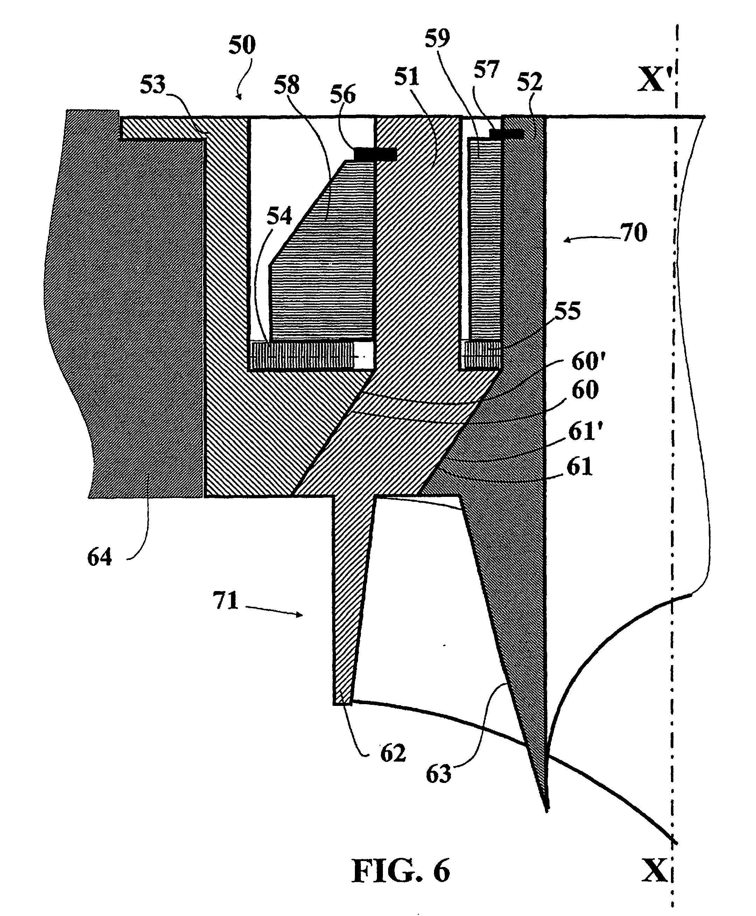

Après démoulage, l'élément moulant représenté à la figure **4** adopte la géométrie montrée sur la figure **5** selon laquelle la tête **42** de l'élément moulant est partiellement sortie de sa base **46**. En outre, il est judicieux de prévoir des moyens de rappel élastique pour ramener l'élément moulant **40** dans sa position de moulage de façon à reproduire de manière identique la même configuration de découpure sur tous les pneumatiques moulés avec ledit élément moulant.

Un autre mode de réalisation d'un élément moulant selon l'invention est représenté à la figure **6**. Sur cette figure **6**, est présentée une coupe selon un plan contenant l'axe **XX'** de l'élément moulant d'une variante d'élément moulant **50** destiné à mouler deux découpures concentriques l'une par rapport à l'autre, chaque découpure ayant la forme d'une hélice.

L'élément moulant **50** comprend :
- une base **53** de forme générale cylindrique d'axe **XX'** destinée à être montée dans un logement réalisé dans une pièce d'un moule **64** pour pneumatique,
- une tête formée d'un premier cylindre **51** et d'un second cylindre **52,** chacun desdits cylindres se prolongeant respectivement par des lames **62, 63** pour former la partie moulante dudit élément. Les deux cylindres **51, 52** comportent des portées coniques **61, 61'** destinées à être en contact et à permettre la rotation autour de l'axe **XX'** desdits cylindres l'un par rapport à l'autre.

L'assemblage de l'élément moulant est réalisé avant le montage dans un logement prévu sur une pièce de moule de la façon représentée sur la figure **6**. Des portées coniques **60, 60'** sont prévues sur la base **53** et sur la paroi radialement à l'intérieur du premier cylindre **51** radialement le plus à l'intérieur pour venir en contact l'une sur l'autre et permettre la rotation dudit premier cylindre par rapport à ladite base.

Il est de plus prévu des moyens de blocage **56, 58, 54** de l'assemblage du premier cylindre avec la base et des moyens de blocage **57, 59, 55** de l'assemblage du premier cylindre avec le deuxième cylindre **52** pour former l'élément moulant, de façon à maintenir l'assemblage desdits cylindres avec ladite base tout en permettant une libre rotation desdits cylindres autour de **XX'.**

De manière avantageuse, la lame **62** du premier cylindre **51** suit un profil géométrique selon une hélice ayant un angle de signe opposé à celui de l'angle de l'hélice formée par la lame **63** du deuxième cylindre **52** concentrique au premier de façon à provoquer des rotations desdits cylindres dans des sens opposés pendant au moins la phase de démoulage.

Dans ce dernier cas, il peut également être intéressant de prévoir que les lames composant la partie moulante du premier cylindre sont en contact glissant sur les lames de la partie moulante du deuxième cylindre de manière à constituer une sorte de treillis moulant une seule découpure et délimitant une pluralité d'orifices destinés à laisser passer le mélange de caoutchouc pendant le moulage pour former des ponts de liaison entre les parois opposées de ladite découpure.

Les mêmes dispositions peuvent s'appliquer dans le cas où au moins un cylindre porte plusieurs lames formant toutes des hélices parallèles entre elles; de même, la partie moulante d'un élément moulant selon l'invention peut comporter un nombre de cylindres supérieur à deux.

Dans toutes les variantes présentées, il peut être intéressant de prévoir que chaque lame de la partie moulante présente une section transversale dont l'aire décroît en allant de son extrémité fixée à la tête de l'élément moulant vers l'extrémité opposée de ladite partie moulante dans le but de faciliter l'extraction desdites lames hors de la bande de roulement après moulage.

Il peut être également prévu de pourvoir chaque lame de l'élément moulant avec un revêtement réduisant sensiblement les efforts nécessaires pour le démoulage.

## Revendications

1. Pièce d'un moule **(1, 1')** pour mouler une partie d'une bande de roulement d'un pneumatique, ladite pièce de moule **(1, 1')** pouvant être déplacée suivant une direction de moulage/démoulage et comprenant une surface de moulage **(3)** pour mouler une surface de ladite bande, ladite pièce de moule (1, 1') étant pourvue d'au moins un élément moulant **(2, 20)** pour mouler au moins une incision dans ladite bande, ledit élément moulant comportant deux parties situées dans le prolongement l'une de l'autre, une première partie **(5, 22)** formant la partie moulante de l'élément moulant et faisant saillie sur la surface de moulage **(3)** pour mouler ladite découpure dans le pneumatique et une deuxième partie **(7, 24)** ayant la forme d'un cylindre d'axe **XX'** identique ou proche de la direction de moulage/démoulage et étant destinée à être montée dans un logement **(4, 21)** prévu dans la pièce de moule **(1, 1'),** ladite pièce de moule étant **caractérisée**
**en ce qu'**il est prévu des moyens de montage et de fixation **(10, 26)** de la deuxième partie de l'élément moulant dans le logement prévu dans le moule, lesdits moyens de montage autorisant la rotation de l'élément moulant **(2, 20)** autour de son axe **XX'** pendant au moins la phase de démoulage.

2. Pièce d'un moule selon la revendication **1 caractérisée en ce que** les moyens de montage de l'élément moulant sur ladite pièce de moule comprennent une base cylindrique **(34, 46, 51)** pouvant être mise en place et fixée à l'intérieur du logement prévu dans le moule, la deuxième partie de l'élément moulant étant montée libre en rotation par rapport à ladite base.

3. Pièce d'un moule selon la revendication **1** ou la revendication **2 caractérisée en ce que** le logement, prévu pour recevoir un élément moulant pouvant tourner autour de son axe **XX',** est prolongé à l'intérieur dudit moule de façon à permettre le déplacement, dans le sens de ce prolongement, de l'élément moulant et **en ce qu'**il est en outre prévu des moyens pour déplacer, dans la direction **XX'**, l'élément moulant à l'intérieur dudit logement

4. Pièce d'un moule selon la revendication **3 caractérisée en ce que** les moyens prévus pour déplacer l'élément moulant dans la direction **XX'** à l'intérieur de son logement permettent également d'imposer un mouvement de rotation audit élément, le mouvement de rotation étant synchrone avec le mouvement de translation dans le logement

5. Élément moulant **(2, 20, 30, 40, 50)** prévu pour être installé sur une pièce d'un moule moulant une bande de roulement, ledit élément moulant étant destiné à réaliser au moins une incision dans ladite bande, ladite pièce de moule pouvant être animée d'un mouvement de moulage et/ou de démoulage suivant une direction prédéterminée, l'élément moulant étant **caractérisé en ce qu'**il comprend:
• un corps pourvu d'une tête **(7, 24, 33, 42, 70)** prolongée d'une partie moulante **(5, 22, 31, 41, 71),** ladite partie moulante étant destinée à faire saillie à la surface de moulage de la pièce de moule pour mouler au moins une découpure dans la bande en mélange de caoutchouc,
• la tête **(7, 24, 33, 42)** comportant au moins un cylindre de section circulaire d'axe **XX'** définissant l'axe principal de l'élément moulant, et des moyens de montage et de fixation **(10, 26, 34, 46)** dudit élément moulant dans la pièce de moule, lesdits moyens coopérant avec ladite pièce pour permettre une rotation, autour de **XX',** de la tête par rapport au moule quand la partie moulante de l'élément moulant est soumise soit à un effort agissant selon la direction **XX'** soit à un couple de rotation autour de la même direction **XX',** tout en assurant une retenue de l'élément moulant dans la direction **XX'.**

6. Élément moulant **(30, 40, 50)** selon la revendication 5 **caractérisé en ce que** les moyens de montage et de fixation dudit élément moulant sur la pièce de moule comprennent une base de forme cylindrique **(34, 46, 53)** concentrique à la tête de l'élément moulant, ladite base étant destinée à être installée et fixée bloquée en rotation dans un logement prévu dans la pièce de moule portant l'élément moulant et étant prévue pour coopérer avec la tête **(33, 42, 70)** de l'élément moulant pour permettre la rotation de ladite tête par rapport à ladite base et comprenant des moyens de fixation du reste de l'élément moulant.

7. Élément moulant **(30, 40, 50)** selon la revendication 5 ou la revendication 6 **caractérisé en ce que** la partie moulante dudit élément comprend au moins une lame de moulage **(32, 41, 62, 63)** fixée à la tête dudit élément par l'une de ses extrémités et s'étendant dans une direction formant au moins localement un angle non nul avec la direction **XX'** de façon à ce que, sous l'action de contact du mélange de caoutchouc sur ladite lame pendant le démoulage, le corps de l'élément moulant soit entraîné en rotation autour de l'axe **XX',** par rapport à la base **(34, 46, 53)** assurant sa fixation sur la pièce de moule, pour faciliter ledit démoulage.

8. Élément moulant **(30, 40, 50)** selon la revendication **7 caractérisé en ce qu'**au moins une lame **(32, 41, 62, 63)** de la partie moulante forme une hélice autour de **XX'.**

9. Élément, moulant selon la revendication **8 caractérisé en ce que** la partie moulante comporte une pluralité de lames disposées de façon sensiblement parallèle les unes par rapport aux autres, chacune desdites lames formant une hélice.

10. Élément moulant selon la revendication **8** ou la revendication **9 caractérisé en ce que** l'hélice décrite par chaque lame s'inscrit sur une forme en tronc de cône dont la base de plus petit diamètre est située au plus près de la tête dudit élément.

11. Élément moulant selon la revendication **10 caractérisé en ce que** l'angle du tronc de cône est compris entre **0°** et **20°.**

12. Élément moulant selon l'une des revendications **5** à **11 caractérisé en ce que** la tête dudit élément moulant comprend au moins deux cylindres concentriques de même axe XX', chaque cylindre portant des lames moulantes, des moyens étant en outre prévus pour assurer la liaison des cylindres entre eux dans la direction **XX'** tout en permettant une rotation autour de l'axe **XX'** desdits cylindres les uns par rapport aux autres.

13. Élément moulant selon la revendication **12 caractérisé en ce que** les lames de l'un des cylindres suivent un profil géométrique selon une hélice ayant un angle de signe opposé à celui de l'angle de l'hélice formée par les lames du cylindre concentrique de façon à provoquer des rotations desdits cylindres de sens opposé pendant au moins la phase de démoulage.

14. Élément moulant selon la revendication **12** ou la revendication **13 caractérisé en ce que** le corps de l'élément moulant comporte deux cylindres concentriques d'axe **XX',** chaque cylindre portant au moins une lame enroulée en hélice, chaque lame portée par le cylindre radialement le plus à l'extérieur étant en contact glissant sur chaque lame portée par le cylindre à l'intérieur et formant une hélice ayant un angle de signe opposé à celui de l'angle de l'hélice décrite par chaque lame portée par le cylindre le plus à l'intérieur de manière à former une trame délimitant des orifices par lesquels le mélange de caoutchouc peut passer pour former des ponts de liaison pendant le moulage.

15. Élément moulant selon l'une des revendications **7** à **14 caractérisé en ce que** les lames présentent une décroissance des aires de leurs sections droites en allant de l'extrémité desdites lames fixée à la tête vers l'extrémité opposée de l'élément moulant.

16. Élément moulant selon l'une des revendications **5** à **15 caractérisé en ce que** la base de fixation de l'élément moulant au moule a la forme d'un cylindre creux d'axe **XX'** à l'intérieur duquel est installée la tête dudit élément moulant, ladite tête étant pourvue sur sa surface externe d'une rainure coopérant avec un élément de relief faisant saillie sur l'intérieur du cylindre formant la base, de manière à permettre une rotation de ladite tête par rapport à l'embase.

17. Élément moulant selon la revendication **16 caractérisé en ce que** la rainure prévue sur la surface externe de la tête de l'élément moulant a, au moins en partie, une géométrie en forme d'hélice d'axe **XX'** et coopère avec un élément de relief faisant saillie sur l'intérieur de la base pour permettre à la fois un mouvement de rotation et un mouvement de translation du corps de l'élément moulant par rapport à la base quand, par exemple, ledit corps est soumis à un effort suivant son axe **XX'.**

18. Élément moulant selon l'une des revendications **5** à **17 caractérisé en ce qu'**il est, en outre, prévu des moyens pour réduire les forces de frottement et faciliter le mouvement de rotation du corps dudit élément par rapport sa base, comme par exemple un roulement à billes.

19. Bande de roulement en mélange de caoutchouc moulée dans un moule comportant au moins un élément moulant selon l'une des revendications **5** à **18**.

## Patentansprüche

1. Stück (1, 1') eines Formwerkzeuges, um einen Teil einer Lauffläche eines Reifens abzuformen, wobei das genannte Formwerkzeugstück (1, 1') in einer Richtung des Abformens/Ausformens versetzt werden kann und eine Abformoberfläche (3) aufweist, um eine Oberfläche der genannten Lauffläche abzuformen, wobei das genannte Formwerkzeugstück (1, 1') mit mindestens einem Formelement (2, 20) versehen ist, um mindestens einen Einschnitt in der Lauffläche abzuformen, wobei das genannte Formelement zwei Teile aufweist, die in der gegenseitigen Verlängerung gelegen sind, und zwar einen ersten Teil (5, 22), der den abformenden Teil des Formelements bildet und über die Abformoberfläche (3) vorspringt, um den genannten Ausschnitt im Reifen abzuformen, und einen zweiten Teil (7, 24), der die Form eines Zylinders mit der Achse XX' hat, die identisch mit der Abformrichtung/Ausformrichtung ist oder dieser nahekommt, und dazu bestimmt ist, in einem Sitz (4, 21) montiert zu werden, der im Formwerkzeugstück (1, 1') vorgesehen ist, und wobei das genannte Formwerkzeugstück **dadurch gekennzeichnet ist, daß**
Mittel zur Montage und Befestigung (10, 26) des zweiten Teils des Formelements in dem Sitz vorgesehen sind, der im Formwerkzeug vorgesehen ist, wobei die genannten Montagemittel die Drehung des Formelements (2, 20) um seine Achse XX' während mindestens der Phase des Ausformens ermöglichen.

2. Stück eines Formwerkzeugs nach Anspruch 1, **dadurch gekennzeichnet, daß** die Montagemittel des Formelements auf dem genannten Formwerkzeugstück einen zylindrischen Sockel (34, 46, 51) aufweisen, der im Inneren des Sitzes, der im Formwerkzeug vorgesehen ist, eingesetzt und befestigt werden kann, wobei der zweite Teil des Formelements bezüglich des genannten Sockels zur freien Drehung angebracht ist.

3. Stück eines Formwerkzeugs nach Anspruch 1 oder Anspruch 2, **dadurch gekennzeichnet, daß** der Sitz, der vorgesehen ist, um ein Formelement aufzunehmen, das sich um seine Achse XX' drehen kann, im Inneren des genannten Formwerkzeugs derart verlängert ist, daß er die Versetzung des Formelements in Richtung dieser Verlängerung gestattet, und daß außerdem Mittel vorgesehen sind, um das Formelement im Inneren des genannten Sitzes in der Richtung XX' zu versetzen.

4. Stück eines Formwerkzeugs nach Anspruch 3, **dadurch gekennzeichnet, daß** die Mittel, die vorgesehen sind, um das Formelement in seinem Sitz in der Richtung XX' zu versetzen, es auch gestatten, eine Drehbewegung für das genannte Element zu erzwingen, wobei die Drehbewegung synchron mit der Translationsbewegung im Sitz ist.

5. Formelement (2, 20, 30, 40, 50), das dazu vorgesehen ist, auf einem Stück eines Formwerkzeuges angebracht zu werden, das eine Lauffläche abformt, wobei das genannte Formelement dazu bestimmt ist, mindestens einen Einschnitt in der genannten Lauffläche herzustellen, wobei das genannte Formwerkzeugstück zu einer Abformbewegung und/oder Ausformbewegung in einer vorbestimmten Richtung angeregt werden kann, und wobei das Formelement **dadurch gekennzeichnet ist, daß** es die folgenden Merkmale aufweist:
• einen Körper, der mit einem verlängerten Kopf (7, 24, 33, 42, 70) eines abformenden Teils (5, 22, 31, 41, 71) versehen ist, wobei das genannte, abformende Teil dazu bestimmt ist, auf der Abformoberfläche des Formwerkzeugstücks vorzuspringen, um mindestens einen Ausschnitt in der Lauffläche aus Gummimischung abzuformen, und
• der Kopf (7, 24, 33, 42) weist mindestens einen Zylinder mit Kreisquerschnitt mit der Achse XX', die die Hauptachse des Formelements bildet, und Montage- und Befestigungsmittel (10, 26, 34, 46) des genannten Formelements im Formwerkzeugstück auf, wobei die genannten Mittel mit dem genannten Stück zusammenwirken, um eine Drehung um XX' des Kopfes in Bezug auf das Formwerkzeug zu gestatten, wenn der abformende Teil des Formelements entweder einer Kraft ausgesetzt wird, die in Richtung XX' wirkt, oder einem Drehmoment um die selbe Richtung XX', während gleichzeitig eine Blockierung des Formelements in Richtung XX' sichergestellt ist.

6. Formelement (30, 40, 50) nach Anspruch 5, **dadurch gekennzeichnet, daß** die Montage- und Befestigungsmittel des genannten Formelements auf dem Formwerkzeugstück einen zylinderförmigen Sockel (34, 46, 53) aufweisen, der konzentrisch zum Kopf des Formelements ist, wobei der genannte Sockel dazu bestimmt ist, in drehfester Blockierung in einem Sitz eingebaut und befestigt zu werden, der im Formwerkzeugstück vorgesehen ist, das das Formelement trägt, und vorgesehen ist, um mit dem Kopf (33, 42, 70) des Formelements zusammenzuwirken, um die Drehung des genannten Kopfes in Bezug auf den genannten Sockel zu bewirken, sowie Mittel zur Befestigung des Restes des Formelements aufweisen.

7. Formelement (30, 40, 50) nach Anspruch 5 oder Anspruch 6, **dadurch gekennzeichnet, daß** der formgebende Teil des genannten Elements mindestens eine Abformzunge (32, 41, 62, 63) aufweist, die am Kopf des genannten Elementes mit einem seiner Enden befestigt ist und sich in einer Richtung erstreckt, die mindestens örtlich einen Winkel, der nicht Null ist, zur Richtung XX' bildet, so daß unter Wirkung der Berührung der Gummimischung auf der genannten Zunge während des Ausformens der Körper des Formelements zur Drehung um die Achse XX' bezüglich des Sockels (34, 46, 53) angetrieben wird, der die Befestigung auf dem Formwerkzeugstück sicherstellt, um das Ausformen zu erleichtern.

8. Formelement (30, 40, 50) nach Anspruch 7, **dadurch gekennzeichnet, daß** mindestens eine Zunge (32, 41, 62, 63) des formgebenden Teils eine Wendel um XX' bildet.

9. Formelement nach Anspruch 8, **dadurch gekennzeichnet, daß** der formgebende Teil eine Vielzahl von Zungen aufweist, die im wesentlichen parallel zueinander angeordnet sind, wobei jede der genannten Zungen eine Wendel bildet.

10. Formelement nach Anspruch 8 oder Anspruch 9, **dadurch gekennzeichnet, daß** die Wendel, die von jeder Zunge beschrieben wird, in eine Kegelstumpfform einbeschrieben ist, deren Basis mit dem kleinsten Durchmesser dem Kopf des genannten Elements nächstgelegen ist.

11. Formelement nach Anspruch 10, **dadurch gekennzeichnet, daß** der Winkel des Kegelstumpfes zwischen 0° und 20° liegt.

12. Formelement nach einem der Ansprüche 5 bis 11, **dadurch gekennzeichnet, daß** der Kopf des genannten Formelements mindestens zwei konzentrische Zylinder mit der selben Achse XX' aufweist, von denen jeder Zylinder abformende Zungen trägt, wobei außerdem Mittel vorgesehen sind, um die Verbindung der Zylinder untereinander in der Richtung XX' sicherzustellen, während sie gleichzeitig eine Drehung der genannten Zylinder zueinander um die Achse XX' gestatten.

13. Formelement nach Anspruch 12, **dadurch gekennzeichnet, daß** die Zungen des einen der Zylinder einem geometrischen Profil in einer Wendel folgen, die einen Winkel aufweist, der zu dem des Winkels der Wendel entgegengesetzt ist, die von den Zungen des konzentrischen Zylinders gebildet ist, so daß mindestens während der Phase des Ausformens Drehungen der genannten Zylinder in entgegengesetzter Richtung verursacht werden.

14. Formelement nach Anspruch 12 oder Anspruch 13, **dadurch gekennzeichnet, daß** der Körper des Formelements zwei konzentrische Zylinder mit der Achse XX' aufweist, wobei jeder Zylinder mindestens eine wendelförmig gewickelte Zunge trägt, jede vom Zylinder getragene Zunge, die radial am weitesten außen liegt, in gleitender Berührung auf jeder Zunge steht, die vom Zylinder im Inneren getragen wird, und eine Wendel bildet, die einen Winkel mit entgegengesetztem Vorzeichen zu dem des Winkels der Wendel besitzt, die von jeder Zunge beschrieben wird, vom Zylinder innen getragen wird, um auf diese Weise ein Raster zu bilden, das die Öffnungen begrenzt, durch die die Gummimischung hindurchtreten kann, um während des Abformens Verbindungsbrücken zu bilden.

15. Formelement nach einem der Ansprüche 7 bis 14, **dadurch gekennzeichnet, daß** die Zungen eine Abnahme der Flächen ihrer Querschnitte aufweisen, indem man vom Ende der genannten Zungen, das am Kopf befestigt ist, zum entgegengesetzten Ende des Formelements vorangeht.

16. Formelement nach einem der Ansprüche 5 bis 15, **dadurch gekennzeichnet, daß** der Sockel der Befestigung des Formelements an dem Formwerkzeug die Form eines Hohlzylinders mit der Achse XX' hat, in dessen Innerem der Kopf des genannten Formelements angebracht ist, wobei der genannte Kopf auf seiner Außenoberfläche mit einer Rille versehen ist, die mit einem vorspringenden Element zusammenwirkt, das über das Innere des Zylinders vorspringt, der den Sockel bildet, um auf diese Weise eine Drehung des genannten Kopfes in Bezug auf auf den Fuß zu gestatten.

17. Formelement nach Anspruch 16, **dadurch gekennzeichnet, daß** die Rille, die auf der Außenoberfläche des Kopfes des Formelements vorgesehen ist, mindestens teilweise eine Geometrie in Form einer Wendel mit der Achse XX' aufweist und mit einem vorspringenden Element zusammenwirkt, das auf dem Inneren des Sockels vorspringt, um gleichzeitig eine Drehbewegung und eine Translationsbewegung des Körpers des Formelements bezüglich des Sockels zu gestatten, wenn zum Beispiel der genannte Körper einer Kraft in seiner Achse XX' unterzogen wird.

18. Formelement nach einem der Ansprüche 5 bis 17, **dadurch gekennzeichnet, daß** außerdem Mittel vorgesehen sind, um die Kräfte der Reibung zu verringern und um die Drehbewegung des Körpers des genannten Elements in Bezug auf seinen Sockel zu erleichtern, wie zum Beispiel ein Kugellager.

19. Lauffläche aus Gummimischung, die in einem Formwerkzeug abgeformt wurde, das mindestens ein Formelement nach einem der Ansprüche 5 bis 18 aufweist.

## Claims

1. A mould member (1, 1') for moulding a part of a tyre tread, said mould member (1, 1') being movable in a moulding/mould-stripping direction and comprising a moulding surface (3) for moulding a surface of said tread, said mould member (1, 1') being provided with at least one moulding element (2, 20) for moulding at least one incision in said tread, said moulding element comprising two parts situated in the extension of one another, a first part (5, 22) forming the moulding part of the moulding element and projecting from the moulding surface (3) in order to mould a cutout in the tyre and a second part (7, 24) in the form of a cylinder of axis XX' identical or close to the moulding/mould stripping direction and intended to be mounted in a seat (4, 21) provided in the mould member (1, 1'), said mould member being **characterised in that**
means (10, 26) of mounting and fastening the second part of the moulding element in the seat provided in the mould are provided, said mounting means allowing rotation of the moulding element (2, 20) on its axis XX' during at least the mould stripping phase.

2. A mould member according to Claim 1, **characterised in that** the means of mounting the moulding element on said mould member comprise a cylindrical base (34, 46, 51) that can be set in place and fastened in the seat provided in the mould, the second part of the moulding element being mounted in free rotation on said base.

3. A mould member according to Claim 1 or 2, **characterised in that** the seat, provided to receive a moulding element that can turn on its axis XX', is extended inside said mould so as to allow movement of the moulding element in the direction of that extension and **in that** means are furthermore provided for moving the moulding element in said seat in the direction XX'.

4. A mould member according to Claim 3, **characterised in that** the means provided for moving the moulding element in the direction XX' inside its seat also make possible a rotary motion of said element, the rotary motion being synchronous with the translational motion in the seat.

5. A moulding element (2, 20, 30, 40, 50) arranged to be installed on a mould member for moulding a tread, said mould member being intended to make at least one incision in said tread, said mould member being capable of being driven in a moulding and/or mould stripping motion in a predetermined direction, the moulding element being **characterised in that** it comprises:
• a body equipped with a head (7, 24, 33, 42, 70) extended by a moulding part (5, 22, 31, 41, 71), said moulding part being intended to project from the moulding surface of the mould member in order to mould at least one cutout in the tread of rubber mix,
• the head (7, 24, 33, 42) having at least one cylinder of circular section of axis XX' defining the main axis of the moulding element, and means (10, 26, 34, 46) of mounting and fastening said moulding element in the mould member, said means cooperating with said member in order to permit rotation of the head about XX' relative to the mould, when the moulding part of the moulding element is subjected either to a force acting in the direction XX' or to a torque about the same direction XX', while ensuring retaining of the moulding element in the direction XX'.

6. A moulding element (30, 40, 50) according to Claim 5, **characterised in that** the means of mounting and fastening said moulding element on the mould member comprise a cylinder-shaped base (34, 46, 53) concentric to the head of the moulding element, said base being intended to be installed and retained in rotation in a seat provided in the mould member bearing said moulding element and being designed to cooperate with the head (33, 42, 70) of the moulding element in order to permit the rotation of said head relative to said base and comprising means for fastening the rest of the moulding element.

7. A moulding element (30, 40, 50) according to Claim 5 or 6, **characterised in that** the moulding part of said element comprises at least one moulding blade (32, 41, 62, 63) fastened to the head of said element at one of its ends and extending in a direction forming at least locally a non-zero angle with the direction XX', so that, under the action of contact of the rubber mix on said blade during mould stripping, the body of the moulding element is driven in rotation on the axis XX' relative to the base (34, 46, 53), ensuring its retention on the mould member, facilitating said mould stripping.

8. A moulding element (30, 40, 50) according to Claim 7, **characterised in that** at least one blade (32, 41, 62, 63) of the moulding part forms a helix around XX'.

9. A moulding element according to Claim 8, **characterised in that** the moulding part comprises a plurality of blades arranged substantially parallel to one another, each of said blades forming a helix.

10. A moulding element according to Claim 8 or 9, **characterised in that** the helix described by each blade is inscribed on a truncated cone shape whose base of narrowest diameter is situated as close as possible to the head of said element.

11. A moulding element according to Claim 10, in which the angle of the truncated cone ranges between 0° and 20°.

12. A moulding element according to one of Claims 5 to 11, **characterised in that** the head of said moulding element comprises at least two concentric cylinders of the same axis XX', each cylinder bearing moulding blades, means further being provided to ensure the connection of the cylinders to each other in the direction XX' while permitting rotation on the axis XX' of said cylinders relative to each other.

13. A moulding element according to Claim 12, **characterised in that** the blades of one of the cylinders follow a geometric profile along a helix having an angle of sign opposite that of the angle of the helix formed by the blades of the concentric cylinder, so as to produce rotations of said cylinders of opposite direction during at least the mould stripping phase.

14. A moulding element according to Claim 12 or 13, **characterised in that** the body of the moulding element comprises two concentric cylinders of axis XX', each cylinder bearing at least one helix-wound blade, each blade borne by the radially outermost cylinder being in sliding contact on each blade borne by the inner cylinder and forming a helix having an angle of sign opposite that of the angle of the helix described by each blade borne by the innermost cylinder, so as to form a mesh defining openings through which the rubber mix can pass to form connecting bridges during moulding.

15. A moulding element according to one of Claims 7 to 14, **characterised in that** the area of the cross-sections of the blades decreases from the end of said blades fastened to the head to the opposite end of the moulding element.

16. A moulding element according to one of Claims 5 to 15, **characterised in that** the base fastening the moulding element to the mould has a base in the shape of a hollow cylinder of axis XX', inside which the head of said moulding element is installed, said head being provided on its outer surface with a groove cooperating with an element in relief projecting from the inside of the cylinder forming the base, so as to allow rotation of said head relative to the base.

17. A moulding element according to Claim 16, **characterised in that** the groove provided on the outer surface of the head of the moulding element has, at least in part, a helix-shaped geometry of axis XX' and cooperates with an element in relief projecting from the inside of the base in order to allow at the same time a rotary motion and a translational motion of the body of the moulding element relative to the base when, for example, said body is subjected to a force along its axis XX'.

18. A moulding element according to one of Claims 5 to 17, **characterised in that** furthermore means are provided for reducing the frictional forces and facilitating the rotary motion of the body of said element relative to its base, such as for example a ball bearing.

19. A rubber mix tread moulded in a mould comprising at least one moulding element according to one of Claims 5 to 18.
